# EUROPÄISCHE PATENTSCHRIFT

(11) **EP 0 937 205 B1**
(45) Veröffentlichungstag und Bekanntmachung des Hinweises auf die Patenterteilung: **22.11.2000**
(21) Anmeldenummer: 97937428.7
(22) Anmeldetag: 07.08.1997
(51) Int. Cl.: F02N 11/08

(54) **STARTEREINHEIT FÜR EINE BRENNKRAFTMASCHINE**
STARTER FOR AN INTERNAL COMBUSTION ENGINE
BLOC STARTER POUR MOTEUR A COMBUSTION INTERNE

(30) Priorität: 07.11.1996 DE 19645943
(43) Veröffentlichungstag der Anmeldung: 25.08.1999
(73) Patentinhaber: ROBERT BOSCH GMBH, 70442 Stuttgart (DE)
(72) Erfinder: AHNER, Peter, D-71032 Boeblingen (DE); SCHUSTEK, Siegfried, D-71254 Ditzingen (DE); ACKERMANN, Manfred, D-71570 Oppenweiler (DE); EISENHARDT, Martin, D-71272 Renningen (DE); SCHENK, Robert, D-71701 Schwieberfingen (DE)
(86) Internationale Anmeldenummer: DE9701663
(87) Internationale Veröffentlichungsnummer: WO9820252

(56) Entgegenhaltungen:
- DE-A- 2 917 139
- DE-A- 3 048 972
- PATENT ABSTRACTS OF JAPAN vol. 007, no. 199 (M-240), 3.September 1983 & JP 58 098658 A (NISSAN JIDOSHA KK), 11.Juni 1983,

## Beschreibung

### Stand der Technik

Die Erfindung bezieht sich auf eine Startereinheit für eine Brennkraftmaschine nach der Gattung des Hauptanspruchs. Eine derartige Startereinheit ist aus dem Patent Abstract of Japan Vol. 007 No 199 (JP-A-58 098 658) bekannt, wonach ein Starter über ein Ritzel/Zahnkranz-Getriebe mit der Kurbelwelle der Maschine verbunden ist.

Für ein Startsystem gibt es im wesentlichen drei Lösungsansätze:
1. konventioneller elektrischer Starter (Anlasser).
   Eine solche Bauart führt heutzutage aus Gründen der verhältnismäßig kurzen erreichbaren Gesamtbetriebsdauer des Startermotors, insbesondere seines Ritzels, seines Zahnkranzes und seiner Überholkupplung und auch aus Geräuschgründen nicht mehr zu einer Lösung mit Zukunftsaussichten.
2. Startergenerator mit Direktstart.
   Dabei ist der Startergenerator fest mit der Kurbelwelle verbunden. Er bildet im Startfalle den Startermotor der von einer Batterie gespeist wird und im Betriebsfalle einen Generator zum Laden der Batterie.
   Diese Lösung ist aus Gründen notwendiger Startenergie und Startleistung (ca. 150 Nm bis 200 Nm Kaltstartdrehmoment bei einem Mittelklassefahrzeug) mit einer üblichen Starter-Bleibatterie von 12 bis 24 V nicht darstellbar. Außerdem müßte der Elektromotor des Startergenerators um mehr als den Faktor 3 gegenüber dem Bedarf für die Generatorleistung vergrößert werden, was u. a. auch bauraummäßig zu Schwierigkeiten führen würde. Zum Starten einer betriebswarmen Brennkraftmaschine wäre ein solcher Startgenerator eindeutig überdimensioniert.
3. Startergenerator mit Impulsstart.
   Für einen Impulsstart wird bei abgekuppelter Brennkraftmaschine (samt Getriebe) die Schwungmasse zunächst auf eine Aufziehdrehzahl hochgedreht. Bei schnell schließender Kupplung wirft die Schwungmasse dann die Brennkraftmaschine mit Rotationsenergie an.

Neue Fahrzeugkonzepte, die insbesondere hinsichtlich Umweltschutz und Kraftstoffverbrauch optimiert werden, erfordern ein Abschalten der Brennkraftmaschine an der Ampel; die gängige Bezeichnung dafür ist "Start-Stopp-Betrieb". Außerdem soll die Brennkraftmaschine entweder nur ausgekuppelt, vorzugsweise aber ganz abgeschaltet werden, wenn das Fahrzeug in einer Schubphase ist, letzterem dient eine "Schwung-Nutz-Automatik".

Eine Anwendung dieser modernen Technik bedeutet aber eine etwa um den Faktor 10 erhöhte Anzahl von Startzyklen, wodurch ein früher auf 40000 Startzyklen ausgelegter Starter nun 400000 bis 600000 Startzyklen aushalten müßte. Andererseits haben moderne Fahrzeuge aus Gründen des Komforts und weil auch eine immer größere Zahl elektrisch betätigter Nebenaggregate zum Einsatz kommen, eine um bis zum Faktor 5 erhöhte Generatorleistung (bisher 1 bis 1,5 kW, künftig 5 kW und mehr). Wenn die Schwung-Nutz-Automatik häufig einschaltet, entstehen weitere Probleme in der Versorgung des elektrischen Bordnetzes.

Bei einer Ausführung nach der DE 30 48 972 C2 ist das Problem der Generatorleistung zum Teil gelöst durch eine Generator-Installation auf der Kurbelwelle zwischen der Brennkraftmaschine und der Schwungmasse, wobei dann bei Verwendung eines Handschaltgetriebes zwei Kupplungen notwendig sind, die vorteilhafter Weise vor und hinter der Schwungmasse angeordnet werden. Mit einer solchen Einrichtung ist es dann mit einer Schwung- Nutz- Automatik möglich, Generatorleistung zu erzeugen.

Für normale Kaltstarts ist dort ein solcher "Impulsstart" geeignet. Er ist aber aus Gründen des Zeitbedarfs ungünstig für Wiederholstarts, wie sie mit warmer Brennkraftmaschine an der Ampel oder am Ende einer Schubphase durchgeführt werden.

Das gleiche Problem liegt auch bei einer Bauart vor, wie sie in der DE 29 17 139 A1 beschrieben ist. Bei dieser bekannten Startereinheit ist die Schwungmasse der Kurbelwelle zu- und abkoppelbar und kann die Brennkraftmaschine beim Verzögern, beim Bremsen oder beim Schubbetrieb durch Unterbrechen des Antriebsstranges mit einer Minimum-Drehzahl, beispielsweise mit der Leerlauf-Drehzahl, weiterlaufen lassen. Bei kurzzeitigen Stillständen, wie z. B. bei Ampelstopps, wird der Antriebsstrang zwar ebenfalls unterbrochen, hierbei wird aber die Brennkraftmaschine stillgesetzt, während die Schwungmasse weiterdreht und dann zum Wiederstarten der Brennkraftmaschine dieser über die Kupplung wieder zugekoppelt wird. Dabei ist es auch möglich, bei zu stark abgefallener Schwungmassen-Drehzahl einen Elektromotor zu verwenden, um die Drehzahl der Schwungmasse wieder anzuheben.

Insgesamt waren bisher bei einem Konzept Kurbelwellen-Starter-Generator entweder als Direkt-Start-System ein zu hohes Startmoment für den Kaltstart maßgebend für die Auslegung der elektrischen Maschine und verschiedener anderer elektrischer Komponenten, so daß insgesamt kein sinnvoller Kompromiß zu finden war, oder bei Verwendung eines klassischen Startes (Anlasser) oder eines Impulsstarts waren die Forderungen für den Wiederholstart bezüglich Startzeit, Geräuscharmut, Verschleiß und Lebensdauer für die hohe, geforderte Zyklenzahl von 400000 und mehr in der Summe nicht erfüllbar.

Der Erfindung liegt die Aufgabe zugrunde, diesen Nachteil zu vermeiden und eine Startereinheit für eine Brennkraftmaschine zu schaffen, die bei allen Startphasen selbsttätig die optimale Startmethode auswählt und bei Laufender Brennkraftmaschine auf Generatorbetrieb umschaltbar ist.

Diese Aufgabe wird gemäß der Erfindung gelöst durch die kennzeichnenden Merkmale des Hauptanspruchs.

Bei der erfindungsgemäßen Aufteilung in unterschiedliche Startmethoden über die Brennkraftmaschinen-Temperatur sind alle Forderungen an ein auf eine hohe Zyklenzahl von 400000 und mehr ausgelegtes Startsystem gut erfüllbar. Von besonderem Vorteil ist hierbei, daß sich eine wirtschaftliche Gesamtlösung ergibt durch einen schnellen, geräuscharmen Direktstart einerseits und andererseits einen zwar etwas zeitaufwendigeren aber sicher beherrschbaren Alternativstart, wobei in Verbindung mit einem automatischen Schaltgetriebe auch bei der vorgeschlagenen Lösung eine Gesamtanordnung mit nur einer Kupplung darstellbar ist.

Vorteilhafte Weiterbildungen des Gegenstandes des Anspruchs 1 ergeben sich aus den Merkmalen der Unteransprüche sowie aus der Beschreibung und der Zeichnung.

### Zeichnung

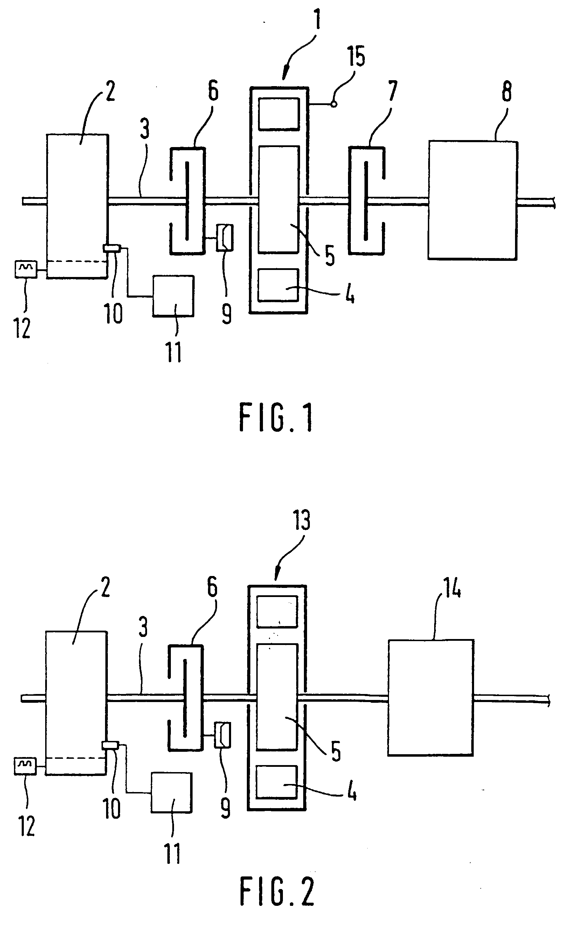

Zwei Ausführungsbeispiele der Erfindung sind in der Zeichnung dargestellt und in der nachfolgenden Beschreibung näher erläutert. Es zeigen: Figur 1 eine Startereinheit bei Anwendung in einem Fahrzeug mit Handschaltgetriebe und Figur 2 eine Startereinheit bei Anwendung in einem Fahrzeug mit automatisiertem Schaltgetriebe.

### Beschreibung der Ausführungsbeispiele

Eine Startereinheit 1 für eine Brennkraftmaschine 2 greift an einer Kurbelwelle 3 (Triebwelle) an und hat einen Schwungmasse-Starter-Generator 4, 5 mit einer nicht näher dargestellten aus Stator und Rotor bestehendenden elektrischen Maschine. Zwischen der Brennkraftmaschine 2 und dem Schwungmasse-Starter-Generator 4, 5 ist eine erste (normale) Kupplung 6 vorgesehen. Eine zweite Kupplung 7 (Fahrkupplung) liegt zwischen dem Schwungmasse-Starter-Generator 4, 5 und einem Handschaltgetriebe 8. Die Kupplung 6 ist mit einem schnellschließenden Servo 9 ausgerüstet.

An der Brennkraftmaschine 2 ist ein Temperaturfühler 10 angebracht, der die jeweilige Temperatur an eine elektrische oder elektronische Umschalteinrichtung 11 meldet. Die Umschalteinrichtung 11 gibt temperaturabhängige Befehle an den Starter-Generator 4, um diesen entweder auf Direktstart oder auf Alternativstart (Impulsstart) mit Schwungmassenenergie einzustellen. An der Brennkraftmaschine 2 kann ein Latentwärmespeicher 12 zur Vorwärmung des Motoröls vorgesehen sein.

Die Alternativstarts werden bei stillstehender Brennkraftmaschine bei deren Temperatur unter beispielsweise 50° C und die Direktstarts für Temperaturen über beispielsweise 50° C vorgenommen. Für die sehr viel kleinere Zahl der Alternativstarts (Zyklenzahl unter 20000) wird ein Impulsstart durchgeführt, bei dem der Starter-Generator 4 bei abgekoppelter Brennkraftmaschine 2 die Schwungmasse 5 zunächst auf eine sogenannte "Aufziehdrehzahl" von etwa 1200 U/min. hochdreht und dann bei schnellschließender Kupplung 6 die Brennkraftmaschine über die Rotationsenergie der Schwungmasse 5 anwirft, wobei das Schaltgetriebe 8 abgekuppelt bleibt.

Das erforderliche Startmoment bei den Wiederholstarts wird durch die bei hohen Temperaturen relativ kleinen Reibmomente und im Verhältnis dazu hohen Kompressions- und Beschleunigungsmomente bestimmt. Das Startmoment kann durch eine vorgelagerte, kurze Dekompressionsphase reduziert werden. Da die Startzeit bei einem Direktstart sehr kurz ist (=< 0,5 sec.), kann die elektrische Maschine (Starter-Generator) kurzzeitig überlastet werden, so daß sich eine masse- und bauraumoptimierte Lösung ergibt. Der jeweilige Startvorgang wird durch Anlegen eines Startsignals am Eingang 15 ausgelöst.

Die Figur 2 zeigt mit gleichen Bezugszahlen für entsprechende Teile eine ähnliche Startereinheit 13 wie die Figur 1. Hier fällt jedoch die zweite Kupplung 7 weg, weil das Schaltgetriebe als automatisches Schaltgetriebe 14 ausgebildet ist. Dabei muß die jetzt einzige Kupplung 6 mit dem dynamischen Servo 9 für den Impulsstart ausgerüstet sein. Die Steuerung muß eine Getriebesynchronisation und beim automatisierten Umschalten der Gänge eine Stabilisierung der Motordrehzahl beinhalten, d. h., die ohnehin im automatischen Schaltgetriebe 14 verwendeten Komponenten müssen lediglich anders angeordnet sein und etwas aufwendiger angesteuert werden.

Für die beiden Bauarten nach den Figuren 1 und 2 gilt, daß für den Alternativstart bzw. Impulsstart die Umschaltung auf Direktstart von der Temperatur des Motoröles abhängig ist und durch eine Ölvorwärmung des Motoröls beeinflußt werden kann mit der Folge, die Anzahl der Alternativstarts zu reduzieren. Eine solche Ölvorwärmung könnte mittels des Latentwärmespeichers 12 durchgeführt werden.

Auch ist es denkbar, daß zur Erleichterung eines Direktstartes eine kurze Dekompressionsphase eingeführt wird. Des weiteren ist es auch möglich, als Alternativstart bei kaltem Motor das Andrehen der Kurbelwelle 3 über den Impulsstart, also mit der Schwungmasse 5, durchzuführen und den nachfolgenden Hochlauf über den Direktstart zu unterstützen.

Vorteilhaft ist es auch, eine Aufziehdrehzahl für den Impulsstart, abhängig von der Umgebungstemperatur der Brennkraftmaschine 2 oder von der Öltemperatur zu machen.

Dazu kommt, daß eine Grenzbedingung für das Umschalten von einer Startmethode auf die andere adaptiv ermittelbar sein kann.

Schließlich ist es bei Verwendung der erfindungsgemäßen Umschalteinrichtung 11 auch wichtig, daß in Verbindung mit den Komponenten eines automatischen Schaltgetriebes 14 zur Erstellung der Startereinheit 13 nur eine einzige Kupplung 6 notwendig ist.

## Patentansprüche

1. Startereinheit für eine Brennkraftmaschine (2) mit einem Starter und einer Schwungmasse (5), die mit mindestens einer Kupplung (6, 7) an einer Kurbelwelle (3) der Brennkraftmaschine (2) an- bzw. von dieser abkoppelbar ist, wobei die Schwungmasse (5) die Brennkraftmaschine (2) mit Rotationsenergie anwerfen kann, indem sie bei niedriger Temperatur der Brennkraftmaschine (2) diese mit Hilfe der Schwungmasse (5) als Impuls-Startmethode antreibt, bei der der Starter (4) die Schwungmasse (5) zuvor hochdreht, dadurch gekennzeichnet, daß der Starter (4) ein Starter-Generator ist und daß eine Umschalteinrichtung (11) vorgesehen ist, die abhängig von der Temperatur der Brennkraftmaschine (2) die Startereinheit (1; 13) bei hoher Temperatur von der Impuls-Startmethode auf eine Startmethode umschaltet, bei der der an die Brennkraftmaschine direkt an- bzw. abkoppelbarer Starter-Generator (4) diese antreibt.

2. Startereinheit nach Anspruch 1, dadurch gekennzeichnet, daß die bei hoher Temperatur der Brennkraftmaschine (2) durchgeführte Startmethode eine Direktstartmethode ist, bei der der Starter-Generator (4) die Schwungmasse (5) mit angekoppelter Kurbelwelle (3) antreibt.

3. Startereinheit nach einem der Ansprüche 1 und 2, dadurch gekennzeichnet, daß die Umschaltung von der Temperatur des Motoröles abhängig ist und daß durch eine Ölvorwärmung des Motoröls die Anzahl der Alternativstarts zu reduzieren ist.

4. Startereinheit nach Anspruch 3, dadurch gekennzeichnet, daß die Ölvorwärmung mittels Latentwärmespeicher (12) durchgeführt ist.

5. Startereinheit nach einem der Ansprüche 2 bis 4, dadurch gekennzeichnet, daß bei einem Direktstart eine kurze Dekompressionsphase einstellbar ist.

6. Startereinheit nach einem der Ansprüche 3 bis 5, dadurch gekennzeichnet, daß eine Startmethode eine Kombination aus Impuls- und Direktstart ist und derweise erfolgt, daß das Andrehen der Kurbelwelle (3) über den Impulsstart erfolgt und daß der Impulsstart und/oder der nachfolgende Hochlauf über den Direktstart unterstützbar ist.

7. Startereinheit nach einem der Ansprüche 1 bis 6, dadurch gekennzeichnet, daß die Aufziehdrehzahl des Impulsstarts abhängig von Umgebungsbedingungen der Brennkraftmaschine (2) einstellbar ist.

8. Startereinheit nach einem der Ansprüche 1 bis 7, dadurch gekennzeichnet, daß eine Grenzbedingung für das Umschalten von einer Startmethode auf die andere adaptiv ermittelbar ist.

9. Startereinheit nach einem der Ansprüche 1 bis 8 in Verbindung mit Komponenten eines automatischen Schaltgetriebes, dadurch gekennzeichnet, daß für die Einrichtung nur eine einzige Kupplung (6) vorgesehen ist.

10. Startereinheit nach einem der Ansprüche 1 bis 9, dadurch gekennzeichnet, daß durch geeignete Ansteuerung des Startermotors die Synchronisation des Schaltgetriebes unterstützbar ist.

## Claims

1. Starter unit for an internal combustion engine (2), with a starter and with a flywheel mass (5) which is capable of being coupled to and uncoupled from a crankshaft (3) of the internal combustion engine (2) by means of at least one clutch (6, 7), the flywheel mass (5) being capable of starting the internal combustion engine (2) by means of rotational energy, in that, when the temperature of the internal combustion engine (2) is low, it drives the latter with the aid of the flywheel mass (5) as a pulse-starting method, in which the starter (4) runs up the flywheel mass (5) previously, characterized in that the starter (4) is a starter alternator, and in that a change-over device (11) is provided, which, as a function of the temperature of the internal combustion engine (2), changes over the starter unit (1; 13) at high temperature from the pulse-starting method to a starting method in which the starter alternator (4) capable of being directly coupled to and uncoupled from the internal combustion engine drives the latter.

2. Starter unit according to Claim 1, characterized in that the starting method carried out when the temperature of the internal combustion engine (2) is high is a direct starting method, in which the starter alternator (4) drives the flywheel mass (5) with a coupled crankshaft (3).

3. Starter unit according to one of Claims 1 and 2, characterized in that the change-over is dependent on the temperature of the engine oil, and in that the number of alternative starts is to be reduced by means of a preheating of the engine oil.

4. Starter unit according to Claim 3, characterized in that the preheating of the oil is carried out by means of a latent-heat store (12).

5. Starter unit according to one of Claims 2 to 4, characterized in that, during direct starting, a short decompression phase can be set.

6. Starter unit according to one of Claims 3 to 5, characterized in that one starting method is a combination of pulse starting and direct starting and takes place in that the crankshaft (3) is started by pulse starting and in that pulse starting and/or the subsequent run-up can be assisted by direct starting.

7. Starter unit according to one of Claims 1 to 6, characterized in that the cranking speed of the pulse start can be set as a function of ambient conditions of the internal combustion engine (2).

8. Starter unit according to one of Claims 1 to 7, characterized in that a boundary condition for changing over from one starting method to the other can be determined adaptively.

9. Starter unit according to one of Claims 1 to 8 in conjunction with components of an automatic shift transmission, characterized in that only a single clutch (6) is provided for the device.

10. Starter unit according to one of Claims 1 to 9, characterized in that the synchronization of the shift transmission can be assisted by a suitable activation of the starter motor.

## Revendications

1. Bloc de démarreur pour un moteur à combustion interne (2) comprenant un démarreur et un volant d'inertie (5), que l'on peut accoupler avec au moins un embrayage (6, 7) à un arbre de vilebrequin (3) du moteur à combustion interne (2) à celui-ci ou par celui-ci, le volant d'inertie (5) pouvant lancer le moteur à combustion interne (2) avec son énergie cinétique, en entraînant celui-ci quand la température du moteur à combustion interne (2) est basse à l'aide du volant d'inertie (5) en tant que méthode de démarrage par impulsion, lors de laquelle le démarreur (4) fait auparavant tourner à plein régime le volant d'inertie (5),
caractérisé en ce que
- le démarreur (4) est une génératrice - démarreur et
- il est prévu un dispositif de conversion (11), qui fait passer en fonction de la température du moteur à combustion interne (2) le bloc de démarreur (1 ; 13) à température élevée de la méthode de démarrage par impulsion à une méthode de démarrage lors de laquelle la génératrice - démarreur (4), que l'on peut directement accoupler ou désaccoupler avec le moteur à combustion interne, entraîne celui-ci.

2. Bloc de démarreur selon la revendication 1,
caractérisé en ce que
la méthode de démarrage employée quand la température du moteur à combustion interne (2) est élevée est une méthode de démarrage direct, lors de laquelle la génératrice - démarreur (4) entraîne le volant d'inertie (5) avec l'arbre du vilebrequin (3) accouplé.

3. Bloc de démarreur selon l'une des revendications 1 et 2,
caractérisé en ce que
- la conversion est fonction de la température de l'huile du moteur, et
- l'on doit réduire le nombre des démarrages alternatifs par un réchauffement de l'huile du moteur.

4. Bloc de démarreur selon la revendication 3,
caractérisé en ce que
l'on effectue le réchauffement de l'huile au moyen d'un accumulateur de chaleur latente (12).

5. Bloc de démarreur selon l'une des revendications 2 à 4,
caractérisé en ce que
l'on peut établir une courte phase de décompression lors d'un démarrage direct.

6. Bloc de démarreur selon l'une des revendications 3 à 5,
caractérisé en ce que
une méthode de démarrage est une combinaison d'un démarrage à impulsion et d'un démarrage direct et a lieu de telle manière que la mise en rotation de l'arbre du vilebrequin (3) a lieu au moyen du démarrage par impulsion, et le démarrage par impulsion et/ou la rotation à plein régime qui s'en suit peut être soutenue au moyen du démarrage direct.

7. Bloc de démarreur selon l'une des revendications 1 à 6,
caractérisé en ce que
la vitesse de rotation de montée en puissance du démarrage par impulsion peut être réglée en fonction des conditions environnantes du moteur à combustion interne (2).

8. Bloc de démarreur selon l'une des revendications 1 à 7,
caractérisé en ce que
l'on peut déterminer une condition limite pour le passage d'une méthode de démarrage à l'autre de façon adaptative.

9. Bloc de démarreur selon l'une des revendications 1 à 8, en liaison avec des composants d'une boîte de vitesse automatique,
caractérisé en ce que
pour le dispositif il n'est prévu qu'un seul embrayage (6).

10. Bloc de démarreur selon l'une des revendications 1 à 9,
caractérisé en ce que
l'on peut soutenir la synchronisation de la boîte de vitesse par une commande appropriée du moteur du démarreur.
